**Europäisches Patentamt**

**European Patent Office**

**Office européen des brevets**

(19)

(11) **EP 1 555 256 A2**

(12) **EUROPÄISCHE PATENTANMELDUNG**

(43) Veröffentlichungstag:
**20.07.2005  Patentblatt 2005/29**

(51) Int Cl.$^7$: **C06B 21/00**

(21) Anmeldenummer: **04027815.2**

(22) Anmeldetag: **24.11.2004**

(84) Benannte Vertragsstaaten:
**AT BE BG CH CY CZ DE DK EE ES FI FR GB GR
HU IE IS IT LI LU MC NL PL PT RO SE SI SK TR**
Benannte Erstreckungsstaaten:
**AL HR LT LV MK YU**

(30) Priorität: **16.01.2004  DE 102004002318**

(71) Anmelder: **FRAUNHOFER-GESELLSCHAFT ZUR
FÖRDERUNG DER
ANGEWANDTEN FORSCHUNG E.V.
80686 München (DE)**

(72) Erfinder:
- **Teipel, Ulrich, Dipl.-Ing.**
  **76327 Pfinztal (DE)**
- **Forter-Barth, Ulrich, Dipl.-Ing.**
  **75181 Pforzheim (DE)**
- **Mikonsaari, Irma, Dipl.-Ing.**
  **76327 Pfinztal (DE)**

(74) Vertreter: **Lenz, Steffen, Dipl.-Ing.
Patentanwälte
Lichti & Partner GbR
Postfach 41 07 60
76207 Karlsruhe (DE)**

(54)   **Verfahren zur Herstellung feindisperser kristalliner Treib-, Explosivstoffe und Oxidatoren**

(57)   Es wird ein Verfahren zur Herstellung feindisperser kristalliner Treib-, Explosivstoffe und Oxidatoren vorgeschlagen, indem der zu kristallisierende Stoff in einem Lösungsmittel gelöst, die Lösung in einer Düsenströmung mit einem mit dem Lösungsmittel der Lösung zumindest teilweise mischbaren Antisolvens, in welchem der zu kristallisierende Stoff unlöslich ist, in Kontakt gebracht wird, die feinen Kristalle des Stoffes dabei ausgefällt und die Kristalle anschließend von dem Lösungsmittel bzw. dem Antisolvens abgetrennt werden. Dabei werden die Lösung in einen ersten Düsenkanal einer Mehrstoffdüse und das Antisolvens in einen zweiten, unter einem endlichen Winkel bezüglich des ersten Düsenkanals angeordneten zweiten Düsenkanal der Mehrstoffdüse eingebracht, wird die Lösung innerhalb der Düse mit dem Antisolvens vermischt und werden die ausgefällten Kristalle gemeinsam mit dem Lösungsmittel und dem Antisolvens über einen im Bereich des Schnittpunktes des im wesentlichen linear aufeinander zulaufenden ersten und zweiten Düsenkanals mündenden dritten Düsenkanal aus der Mehrstoffdüse ausgebracht. Die Partikelgröße der erzeugten Kristalle wird durch Variation des Winkels zwischen wenigstens zwei Düsenkanälen der Mehrstoffdüse eingestellt.

**EP 1 555 256 A2**

**Beschreibung**

Die Erfindung betrifft ein Verfahren zur Herstellung feindisperser kristalliner Treib-, Explosivstoffe und/oder Oxidatoren, indem der zu kristallisierende Stoff in wenigstens einem Lösungsmittel gelöst, die Lösung in einer Düsenströmung mit wenigstens einem, mit dem Lösungsmittel der Lösung zumindest teilweise mischbaren Antisolvens, in welchem der zu kristallisierende Stoff nicht oder nur gering löslich ist, in Kontakt gebracht wird, die feinen Kristalle des Stoffes dabei ausgefällt und die Kristalle anschließend von dem Lösungsmittel und/oder dem Antisolvens abgetrennt werden, wobei die Lösung in wenigstens einen ersten Düsenkanal einer Mehrstoffdüse und das Antisolvens in wenigstens einen zweiten, unter einem endlichen Winkel bezüglich des ersten Düsenkanals angeordneten zweiten Düsenkanal der Mehrstoffdüse eingebracht werden, die Lösung innerhalb der Düse mit dem Antisolvens vermischt wird und die ausgefällten Kristalle gemeinsam mit dem Lösungsmittel und dem Antisolvens über wenigstens einen im Bereich des Schnittpunktes des ersten und des zweiten Düsenkanals mündenden dritten Düsenkanal der Mehrstoffdüse aus der Düse ausgebracht werden, wobei Mehrstoffdüsen eingesetzt werden, bei welchen zumindest der erste Düsenkanal und der zweite Düsenkanal im wesentlichen linear aufeinander zulaufen.

Bei vielen Anwendungsgebieten von Treib-, Explosivstoffen und Oxidatoren sind sowohl anläßlich der Herstellung als auch für die Weiterverarbeitung im wesentlichen sphärische Partikel mit regelmäßiger Kernform und definierter mittlerer Partikelgröße sowie enger Partikelgrößenverteilung erwünscht. Dies gilt insbesondere im Falle von Raketentreibstoffen, Treibladungspulvern und pyrotechnischen Formulierungen, z.B. für Gasgeneratoren, bei welchen energetische Materialien in unterschiedlichen Partikelgrößenklassen hergestellt und als bi-, tri- oder mehrmodale Mischungen eingesetzt werden, um eine sehr hohe Schüttdichte zu erzielen. Eine solche Mehrmodalität ermöglicht eine höhere Dichte der Partikelpackung, indem kleinere Partikel in dem zwischen größeren Partikeln vorhandenen Hohlraumvolumen aufgenommen werden können. Die Packungsdichte kann auf diese Weise problemlos größer 80% betragen. Solche hohen Packungsdichten der Partikel sind insbesondere auch dann erwünscht, wenn die Partikelmischung in Treib- und Explosivstofformteile eingearbeitet wird, um den Anteil des in der Regel polymeren Bindematerials gering zu halten.

Die Herstellung von Partikeln aus Treib-, Explosivstoffen und Oxidatoren mit einer Partikelgröße im Bereich von 80 µm bis 400 µm geschieht in der Regel mittels Kühlungs- oder Verdampfungskristallisation. Dabei wird die eine Komponente eines aus wenigstens zwei Komponenten bestehenden homogenen Systems, beispielsweise einer Lösung, einer Schmelze oder eines Gasgemischs, unter Bildung einer festen Phase abgetrennt. Bei der Kristallisation eines oder mehrerer Feststoffe aus einer Lösung mit molekulardisperser Verteilung der Feststoffe in einem Lösungsmittel wird die Lösung durch Kühlen (Kühlungskristallisation), Verdampfen des Lösungsmittels (Verdampfungskristallisation) oder Kombination beider Varianten übersättigt, wobei durch Abbau dieser Übersättigung der überschüssige Feststoff als Kristallisat anfällt, das mechanisch von der Restlösung abtrennbar ist. Die Übersättigung kann durch Unterdruck (Vakuumkristallisation), Aussalzen, Ausfällen, gegebenenfalls durch Zugabe von Impfkeimen oder Zuführung von mechanischer Energie (Agitation) unterstützt werden.

Nachteilig bei den bekannten Kristallisationsverfahren, wie der Kühlungs- und der Verdampfungskristallisation, ist einerseits, daß das Lösungsmittel zum Erhalt von feinpartikulären Kristallen möglichst schnell abgezogen werden muß, was aufgrund der hohen thermischen und mechanischen Empfindlichkeit von Treib-, Explosivstoffen und Oxidatoren nur bedingt möglich ist. Folglich müssen Partikel mit einer mittleren Partikelgröße von etwa bis zu 50 µm durch anschließende Zerkleinerung erzeugt werden, was wiederum angesichts der Empfindlichkeit der genannten Stoffe höchst aufwendig ist und überdies zu sehr unregelmäßigen und zerklüfteten Partikeln führt. Andererseits besteht bei der Kühlungs- und Verdampfungskristallisation grundsätzlich das Problem, daß die Partikel einen nicht unerheblichen Restgehalt des zur Kristallisation eingesetzten Lösungsmittels aufweisen, welches abgetrennt werden muß.

Ferner sind eine Vielzahl von Verfahren bekannt, bei welchen zur Ausfällung des in einem Lösungsmittel gelösten Treib- oder Explosivstoffes ein Antisolvens eingesetzt wird. Die US 5 360 478 A beschreibt ein Verfahren zur Herstellung von Kristallen des Explosivstoffs Cyclotrimethylentrinitramin (Hexogen, RDX), indem das Hexogen in einem Lösungsmittel, insbesondere Aceton oder Cyclohexanon, gelöst und das Lösungsmittel durch Einblasen eines gasförmigen Antisolvens, welches in dem Lösungsmittel löslich ist und in welchem Hexogen nicht löslich ist, insbesondere Kohlendioxid, übersättigt wird. Hierbei wird das Hexogen ausgefällt. Indes sind auch auf diese Weise nur Partikel mit einer Partikelgröße von größer etwa 100 µm erhältlich und gilt hinsichtlich des Restgehaltes an Lösungsmittel, welches den Partikeln anhaftet, das oben in Verbindung mit der Kühlungs- und Verdampfungskristallisation gesagte.

Der US 5 389 263 A ist ein ähnliches Verfahren zum Trennen von Mischungen aus kristallinen Substanzen, z.B. einer Explosivstoffmischung aus Hexogen (RDX) und Oktogen (HMX), entnehmbar, indem die Mischung in einem Lösungsmittel gelöst und der Lösung ein gasförmiges; nahkritisches oder überkritisches Antisolvens zugesetzt wird, um eine der gelösten Substanzen auszufällen und abzutrennen.

Des weiteren sind Verfahren zur Herstellung feiner Partikel aus kristallinen Feststoffen, wie Explosivstoffen, Pharmazeutika oder dergleichen, bekannt (DE 689 07 062 T2, US 5 874 029 A), indem die Feststoffe in einem Lösungsmittel gelöst werden und die Lösung mittels einer Düse in ein Antisolvens zur Kristallisation des Feststoffs eingesprüht wird. Als Antisolvens können jeweils überkritische Fluide eingesetzt werden. Die bekannten Verfahren ermöglichen zwar die Herstellung von kristallinen Partikeln mit gegenüber mittels Kühlungs-, Verdampfungs-, oder Vakuumkristallisation hergestellten Partikeln erhöhter Reinheit und Regelmäßigkeit; gleichwohl besteht die Gefahr der Bildung von Fehlstellen und/oder Einschlüssen von Gasen im Kristallgefüge, was insbesondere bei Explosivstoffen mit einer erhöhten Sensitivität und folglich einem erhöhten Gefährdungspotential bei der Handhabung derselben verbunden. Ferner ist die Einstellung einer definierten Partikelgröße nur bedingt möglich.

Schließlich sind Verfahren zur Herstellung feindisperser kristalliner Treib-, Explosivstoffe und Oxidatoren bekannt, indem der zu kristallisierende Stoff in wenigstens einem Lösungsmittel gelöst, die Lösung in einer Düsenströmung mit wenigstens einem, mit dem Lösungsmittel der Lösung zumindest teilweise mischbaren Antisolvens, in welchem der zu kristallisierende Stoff nicht oder nur gering löslich ist, in Kontakt gebracht wird, die feinen Kristalle des Stoffes dabei ausgefällt und die Kristalle anschließend von dem Lösungsmittel und/oder dem Antisolvens abgetrennt werden. Die Kontaktierung der Lösung mit dem Antisolvens geschieht entweder in einer Koaxialdüse (DE 691 10 099 T2) oder in einer Mehrstoffdüse mit einem ersten Düsenkanal für die Lösung und einem senkrecht in diesen einmündenden zweiten Düsenkanal für das Antisolvens, wobei die Mischung in einem Auslaßkanal der Düse mittels Wirbelelementen verwirbelt (US 3 754 061 A). Die Düsengeometrie ist in beiden Fällen verhältnismäßig aufwendig.

Die WO 96/00610 A1 beschreibt ein Verfahren zur Herstellung von Partikeln aus kristallinen Feststoffen, beispielsweise Treib- und Explosivstoffen, wobei eine Lösung des kristallinen Feststoffes in einen Kristallisationsbehälter eingesprüht und dort mit einem Antisolvens in Kontakt gebracht wird. Gemäß einer Ausführungsform des Verfahrens kann hierzu eine Mehrstoffdüse in Form einer Koaxialdüse mit zumindest einem Düsenkanal für die Lösung und zumindest einem weiteren Düsenkanal für das Antisolvens vorgesehen sein. Die Kristallisation geschieht nicht im Innern der Koaxialdüse, sondern in dem Kristallisationsbehälter, wobei die Koaxialdüse derart ausgebildet ist, daß die Lösung und das als Fällungsmittel dienende Antisolvens getrennt voneinander in den Kristallisationsbehälter eingesprüht werden.

Die EP 1 090 894 A1 beschreibt ein Verfahren gemäß dem Oberbegriff des Anspruchs 1, wobei als Antisolvens ein überkritisches Fluid eingesetzt wird, welches bei dem jeweils zu kristallisierenden Treib- oder Explosivstoff als Fällungsmittel wirkt. Dabei wird die Treib- bzw. Explosivstofflösung im Bereich ihrer Sättigung feindispers in das mit dem Lösungsmittel der Lösung zumindest teilweise mischbare Antisolvens eingedüst. Hierbei diffundiert einerseits das organische Lösungsmittel in das Antisolvens ein. Die Triebkräfte hierfür sind unter anderem der Konzentrationsgradient, wobei unmittelbar nach Einsprühen der Lösung in das Antisolvens die Lösungsmittelkonzentration an der Oberfläche eines Lösungsmitteltropfens etwa 100% beträgt, während in dem den Lösungsmitteltropfen umgebenden Antisolvens die Lösungsmittelkonzentration etwa 0% beträgt. Andererseits diffundiert das Antisolvens in die Lösungsmitteltropfen ein, so daß die Sättigungskonzentration des Treib- bzw. Explosivstoffes in dem Lösungsmitteltropfen schlagartig überschritten wird und es zu einer spontanen Kristallisation des Treib- bzw. Explosivstoffes kommt.

Sofern neben einer Koaxialdüse eine Mehrstoffdüse mit zwei unter einem Winkel von 180° ineinander einmündenden Düsenkanälen (einerseits für die Lösung und andererseits für das Antisolvens) eingesetzt wird, so treten aufgrund der Wechselwirkung der Düsenströmungen beim Einbringen der Lösung in das Antisolvens erhöhte Turbulenzen bzw. an den Grenzflächen der Lösungsmitteltropfen und des Antisolvens erhöhte Scherkräfte auf, die zu einer feineren Dispergierung der Lösung und folglich zur Erzeugung eines feineren und monodisperseren Tropfenspektrums führen. Hierdurch weisen auch die Feststoffpartikel einen kleineren mittleren Durchmesser und eine engere Partikelgrößenverteilung auf. Insbesondere aufgrund der geringen Partikelgröße sind die feinkristallinen Treib- und Explosivstoffe weitestgehend fehlstellenfrei, d.h. sie weisen keine oder nur mäßige Kristalldefekte auf. Die erhaltenen Explosivstoffpartikel zeichnen sich durch eine hohe Reinheit aus und weisen insbesondere weder nennenswerte Reste an organischen Lösungsmitteln noch Einschlüsse von Gasen auf. Durch die schlagartige Überschreitung der Sättigungskonzentration fallen die feinen Explosivstoffpartikel spontan aus, d.h. es kommt praktisch zu keinem Kristallwachstum wie bei den bekannten Kristallisationsverfahren, da schlagartig eine demgegenüber erheblich größere Anzahldichte feinster Keime erzeugt wird. In dem eingesetzten Explosivstoff gegebenenfalls enthaltene Verunreinigungen werden in der Regel in dem als Antisolvens verwendeten Fluid gelöst und somit nicht in die ausgefällten feinen Partikel eingebaut. Mittels des bekannten Verfahrens ist die Herstellung von Explosivstoffen mit einem mittleren Partikeldurchmesser zwischen etwa 10 nm bis zu etwa 300 μm möglich. Aufgrund der hohen Reinheit der Partikel müssen diese weder gewaschen noch in anderer Form gereinigt werden.

Zur Einstellung der gewünschten Partikelgröße wird vorgeschlagen, die Parameter Druck, Temperatur, Konzentration der Lösung, Art des Lösungsmittels bzw. Antisolvens, Düsengeometrie oder Anströmung der Lösung beim Einsprühen in das Antisolvens zu variieren, doch läßt die Druckschrift offen, wie genau dies geschehen soll. Insbesondere wurde festgestellt, daß durch Veränderung der genannten Parameter eine nur sehr schlechte Reproduzierbarkeit der erzeugten Partikelgröße erhalten wird, da viele Parameter, z.B. Temperatur und Druck, voneinander abhängen und somit durch Variation eines Parameters, welcher eine Temperatur- und/oder Druckänderung zur Folge hat, gleich mehrere Parameter verändert werden, so daß praktisch nicht vorhersehbar ist, welche Partikelfraktion erhalten wird.

Ausgehend von diesem Stand der Technik liegt der Erfindung die Aufgabe zugrunde, ein Verfahren der eingangs genannten Art dahingehend weiterzubilden, daß die erhaltene Partikelgröße verhältnismäßig exakt und reproduzierbar voreingestellt werden kann.

Erfindungsgemäß wird diese Aufgabe bei einem Verfahren der eingangs genannten Art dadurch gelöst, daß die Partikelgröße der erzeugten Kristalle durch Variation des Winkels zwischen wenigstens zwei Düsenkanälen der Mehrstoffdüse eingestellt wird.

Überraschenderweise wurde gefunden, daß durch das erfindungsgemäße Verfahren die Partikelgröße der erhaltenen Partikel aus Treib-, Explosivstoffen bzw. Oxidatoren exakt und insbesondere reproduzierbar voreingestellt werden kann, indem ausschließlich der Winkel zwischen zumindest zwei Düsenkanälen der Mehrstoffdüse entsprechend der gewünschten Partikelgröße eingestellt wird, während alle anderen Parameter, wie Temperatur, Druck, Art des Lösungsmittels und Antisolvens, Anströmung bzw. Durchflußrate, konstant gehalten werden. Dabei ergibt sich für die jeweils vorgegebenen, konstant gehaltenen Parameter eine definierte Korrelation der Partikelgröße ausschließlich vom Winkel zwischen den Düsenkanälen, so daß die Partikelgröße in weiten Bereichen reproduzierbar voreingestellt werden kann, ohne eine Vielzahl von aufwendigen, weitgehend empirischen Vorversuchen durchführen zu müssen. Die eingesetzte Mehrstoffdüse kann insbesondere äußerst einfach aufgebaut und im Prinzip von drei in einem Punkt ineinander mündenden Rohren, z.B. mit rundem Querschnitt, gebildet sein, wie es für einen konstanten Winkel von 180° zwischen zwei Düsenkanälen an sich aus der EP 1 090 894 A1, von welcher die Erfindung ausgeht, bekannt ist. Hierbei ist es einerseits von Bedeutung, daß Mehrstoffdüsen eingesetzt werden, bei welchen zumindest der erste Düsenkanal und der zweite Düsenkanal im wesentlichen linear aufeinander zulaufen. Hiermit ist gemeint, daß die Düsenströmung der Lösung und die Düsenströmung des Antisolvens etwa geradlinig ineinander eintreten und insbesondere vor ihrem Inkontakttreten miteinander nicht umgelenkt werden, da andernfalls - z.B. im Falle von Rohrkrümmungen des ersten und/oder des zweiten Düsenkanals unmittelbar vor ihrer Mündungsstelle - die Partikelgröße nur mit einer verminderten Genauigkeit in Abhängigkeit des Winkels zwischen den Düsenkanälen berechnet werden kann, wie es z.B. bei einer Koaxialdüse gemäß der weiter oben erwähnten WO 96/00610 A1 der Fall wäre. Andererseits ist es von Bedeutung, daß die Düsenströmungen nicht außerhalb der Düse in einem Kristallisationsbehälter (WO 96/00610 A1), sondern im Innern der Mehrstoffdüse miteinander in Kontakt gebracht und die Kristalle dort ausgefällt werden, um für reproduzierbare Bedingungen zu sorgen und ferner die Bildung von Einschlüssen von Gasen in den erzeugten Kristallen zu vermeiden.

In bevorzugter Ausführung ist vorgesehen, daß die Partikelgröße der erzeugten Kristalle durch Variationen des Winkels zwischen dem ersten Düsenkanal, in welchen die Lösung eingebracht wird, und dem zweiten Düsenkanal der Mehrstoffdüse, durch welchen das Antisolvens eingebracht wird, eingestellt wird. Dabei kann dieser Winkel beispielsweise in einem Bereich zwischen größer 0° bis einschließlich 180° variiert werden, wobei die erhaltene Partikelgröße um so geringer ist, je größer der Winkel zwischen den genannten Düsenkanälen eingestellt wird bzw. je größer die Relativgeschwindigkeit der miteinander in Kontakt tretenden Düsenströmungen ist. Wie bereits erwähnt, ergibt sich in diesem Fall eine mathematische, in vielen Fällen eine in gewissen Grenzen z.B. etwa lineare Abhängigkeit der Partikelgröße von dem Winkel zwischen den Düsenkanälen, so daß es zur Berechnung des für die gewünschte Partikelgröße erforderlichen Winkels zwischen den Düsenkanälen ausreicht, das Experiment mit konstanten Randbedingungen unter Einsatz von wenigstens zwei Düsen mit verschiedenen Winkeln zwischen dem ersten und dem zweiten Düsenkanal der Mehrstoffdüse durchzuführen und den mit der gewünschten Partikelgröße korrespondierenden Winkel zu extrapolieren. Selbstverständlich kann der Winkel zwischen dem ersten und dem zweiten Düsenkanal auch größer als 180° gewählt werden, so daß die Düsenströmungen in einem Staupunkt der Mehrstoffdüse miteinander verwirbelt werden, von welchem sich der dritte Düsenkanal, über welchen die Partikel gemeinsam mit der Lösung und dem Antisolvens aus der Düse ausgetragen werden, in einer Richtung erstreckt, welche eine entgegengesetzt zur Strömungsrichtung des ersten und des zweiten Düsenkanals angeordnete Strömungsrichtungskomponente aufweist.

In den meisten Fällen ist es zweckmäßig, daß der dritte Düsenkanal der Mehrstoffdüse, aus welchem die erzeugten Kristalle mit dem Lösungsmittel und dem Antisolvens aus der Düse ausgebracht werden, konstant, und zwar in Erstreckungsrichtung der Mittelsenkrechte zwischen dem ersten Düsenkanal und dem zweiten Düsenkanal der Mehrstoffdüse, gehalten wird. Auf diese Weise ist stets eine bezüglich der Strömungsrichtungen der Lösung und des Antisolvens symmetrische Ausströmung des Produktes aus der Düse sichergestellt und sind somit zusätzliche potentielle Einflüsse auf die Partikelgröße (d.h. zusätzlich zu dem Winkel zwischen dem ersten Düsenkanal und dem zweiten Düsenkanal der Mehrstoffdüse) ausgeschlossen.

In bevorzugter Ausführung ist vorgesehen, daß als Mehrstoffdüsen Kapillardüsen eingesetzt werden, wobei vorzugsweise Mehrstoffdüsen mit einem Durchmesser des ersten Düsenkanals und des zweiten Düsenkanals von höchstens 5 mm, insbesondere von höchstens 1 mm, verwendet werden können. Der Durchmesser des dritten Düsenkanals zum Ausbringen der erzeugten Kristalle mit dem Lösungsmittel und dem Antisolvens aus der Düse beträgt mit Vorteil höchstens 10 mm, insbesondere höchstens 2 mm. Das Verhältnis des Durchmessers des ersten und des beispielsweise mit diesem identischen zweiten Düsenkanals der Düse bezüglich dem Durchmesser des dritten Düsenkanals wird dabei zweckmäßig so gewählt, daß der Querschnitt des dritten Düsenkanals wenigstens so groß ist wie die Summe der Querschnitte des ersten und des zweiten Düsenkanals. Der Querschnitt des dritten Düsenkanals kann beispielsweise auch größer als die Summe der Querschnitte des ersten und des zweiten Düsenkanals gewählt werden, um für eine Beschleunigung der Düsenströmung infolge Druckexpansion in der Düse zu sorgen. Mit Vorzug gilt für das Verhältnis der Durchmesser des ersten ($D_1$) und zweiten Düsenkanals ($D_2$) gegenüber dem des dritten Düsenka-, nals ($D_3$) also die folgende Beziehung:

$$(D_1/2)^2 \cdot \Pi + (D_2/2)^2 \cdot \Pi \leq (D_3/2)^2 \cdot \Pi$$

Zu demselben Zweck können auch Mehrstoffdüsen mit zumindest einem Düsenkanal, insbesondere dem dritten Düsenkanal, mit einem sich über dessen Länge verändernden Querschnitt - beispielsweise nach Art einer Laval-Düse - eingesetzt werden, wobei selbstverständlich auch Mehrstoffdüsen mit Düsenkanälen mit im wesentlichen konstantem Querschnitt eingesetzt werden können.

Die erfindungsgemäß vorgesehenen Mehrstoffdüsen können überdies selbstverständlich sowohl als einzelne Düsen als auch als Düsenaggregate eingesetzt werden, wobei die ersten und die zweiten Düsenkanäle solcher Aggregate zweckmäßig gemeinsam mit der Lösung bzw. mit dem Antisolvens beaufschlagbar sind.

In Weiterbildung kann vorgesehen sein, daß die Mehrstoffdüse kontrolliert in Schwingungen versetzt wird. Dies kann einerseits beispielsweise mittels Ultraschall, andererseits z.B. mittels piezoelektrischer Elemente geschehen, wobei sich letztere beim Anlegen eines elektrischen Feldes in einer Richtung ausdehnen, während sie sich in einer anderen Richtung kontrahieren, so daß bei einer vorgegebenen elektrischen Spannung bzw. einem vorgegebenen elektrischen Strom eine reproduzierbare Schwingungsanregung möglich ist. Durch die Anregung der Düse mit kontrollierbaren bzw. steuerbaren mechanischen Schwingungen kann die Verwirbelung der Lösung mit dem Antisolvens beeinflußt werden, wodurch ein sehr monodisperses Tropfenspektrum und somit Partikel mit sehr monodisperser Verteilung erzeugt werden können. Durch das Aufbringen einer solchen periodischen Zwangsstörung auf die Düsenströmung geschieht der Strahlzerfall mit einem gleichmäßigeren Spektrum. Folglich kann mittels der erzeugten Schwingungen die Breite der Partikelgrößenverteilung verringert werden, ohne jedoch die gewünschte mittlere Partikelgröße in nennenswerter Weise zu beeinflussen. Indes ist es in der Regel zweckmäßig, die Amplitude und die Frequenz des Ultraschalls bzw. das elektrische Feld des piezoelektrischen Elementes stets konstant zu halten, um die bei verschiedenen Winkeln der Düsenkanäle der Mehrstoffdüse jeweils erhaltene Partikelgröße nicht durch zusätzliche Parameter zu beeinflussen.

Die Lösung wird in vorteilhafter Ausführung vor Einbringen in den Düsenkanal - genauer: in den ersten Düsenkanal - der Mehrstoffdüse im wesentlichen gesättigt oder gar übersättigt, um für ein spontanes Ausfallen der Partikel beim Inkontakttreten mit dem Antisolvens zu sorgen.

Die Art des eingesetzten Lösungsmittels und Antisolvens richtet sich selbstverständlich nach dem jeweiligen Treib-, Explosivstoff und/oder Oxidator. Während als Lösungsmittel in der Regel organische Lösungsmittel eingesetzt werden können, in welchen sich der zu kristallisierende Stoff in hinreichender Menge löst, kommen als Antisolvens ebenfalls organische Lösungsmittel in Betracht, welche ein demgegenüber erheblich geringeres Lösungsvermögen für den zu kristallisierenden Treib-, Explosivstoff und/oder Oxidator aufweisen. Ebenfalls ist in vielen Fällen der Einsatz von Wasser als Antisolvens von Vorteil.

Darüber hinaus kann als Antisolvens ein überkritisches Fluid eingesetzt werden, wie es als solches aus der eingangs zitierten EP 1 090 894 A1 bekannt ist. So kommen als überkritische Fluide grundsätzlich solche Stoffe in Frage, welche im überkritischen Zustand ein nur geringes Lösungsvermögen für den jeweiligen Treib-, Explosivstoff und/oder Oxidator und ein hohes Lösungsvermögen für das in Verbindung mit dem genannten Stoff verwendete Lösungsmittel aufweisen. Dabei ist von Vorteil, wenn das verwendete Fluid im unterkritischen Zustand gasförmig ist, z. B. Kohlendioxid, Stickstoff, Distickstoffoxid oder dergleichen, so daß es beim Übergang in die Gasphase automatisch von den erzeugten Partikeln abgetrennt wird. Ferner kann durch den Einsatz von Mischungen überkritischer Fluide oder allgemein durch den Einsatz von Mischungen verschiedener Antisolventien das Lösevermögen der Mischung sowohl für den zu kristallisierenden Stoff (möglichst gering) als auch für das Lösungsmittel (möglichst hoch) individuell eingestellt werden.

Ferner können dem Antisolvens zur Erhöhung des Lösevermögens für das Lösungsmittel gegebenenfalls Schleppmittel bzw. Modifier zugesetzt werden, in welchen der zu kristallisierende Stoff nicht oder nur gering löslich ist, wobei im Falle des Einsatzes eines überkritischen Fluides als Antisolvens vorzugsweise solche Schleppmittel verwendet werden, welche beim Expandieren ebenfalls in die Gasphase übergehen und somit eine nachträgliche Abtrennung von den erzeugten Kristallen entbehrlich machen.

Das erfindungsgemäße Verfahren ist auch zur Herstellung von aus wenigstens zwei Treib-, Explosivstoffen und/oder Oxidatoren bestehenden Partikeln, sogenanntem Komposit-Kristallen, geeignet, indem zwei oder mehrere Treib-, Explosivstoffen und/oder Oxidatoren in dem Lösungsmittel gelöst und in der Mehrstoffdüse mit dem Antisolvens in Kontakt gebracht werden.

Das erfindungsgemäße Verfahren eignet sich ferner insbesondere zur Herstellung von feindispersen kristallinen Amin-, Amid-, Nitro-, Nitrat- und/oder Nitramin-Verbindungen, insbesondere aus der Gruppe Ammoniumdinitramid (ADN), Ammoniumnitrat (AN), Kaliumnitrat, Natriumnitrat, 2,4,6-Trinitrotoluol (TNT), 1,3,5-Triamino-2,4,6-trinitrobenzol (TATBN), 3-Nitro-1,2,4-triazol-5-on (NTO), Hexanitrostilben (HNS), Cyclotrimethylentrinitramin (Hexogen, RDX), Cyclotetramethylentetranitramin (Oktogen, HMX), 2,4,6,8,10,12-Hexanitro-2,4,6,8,10,12-hexaazaisowurtzitan (HNIW, CL20), 1-Diamino-2,2-dinitroethylen (DADE, FOX7), FOX12, Pentaerythritoltetranitrat (Nitropenta, PETN), Hexanitrodiphenylamin (Hexyl), Tetranitromethylanilin (Tetryl), Nitroguanidin (NQ), Triaminoguanidinnitrat (TAGN).

Nachstehend ist die Erfindung anhand von Ausführungsbeispielen unter Bezugnahme auf die Zeichnung näher erläutert. Dabei zeigen:

Fig. 1     eine schematische Seitenansicht einer Ausführungsform einer Mehrstoffdüse;

Fig. 2     eine schematische Seitenansicht einer anderen Ausführungsform einer Mehrstoffdüse mit einem gegenüber der Düse gemäß Fig. 1 unterschiedlichen Winkel des ersten und des zweiten Düsenkanals; und

Fig. 3     eine schematische Seitenansicht einer Mehrstoffdüse gemäß Fig. 2 mit einem demgegenüber verschiedenen Winkel zwischen dem ersten und dem zweiten Düsenkanal.

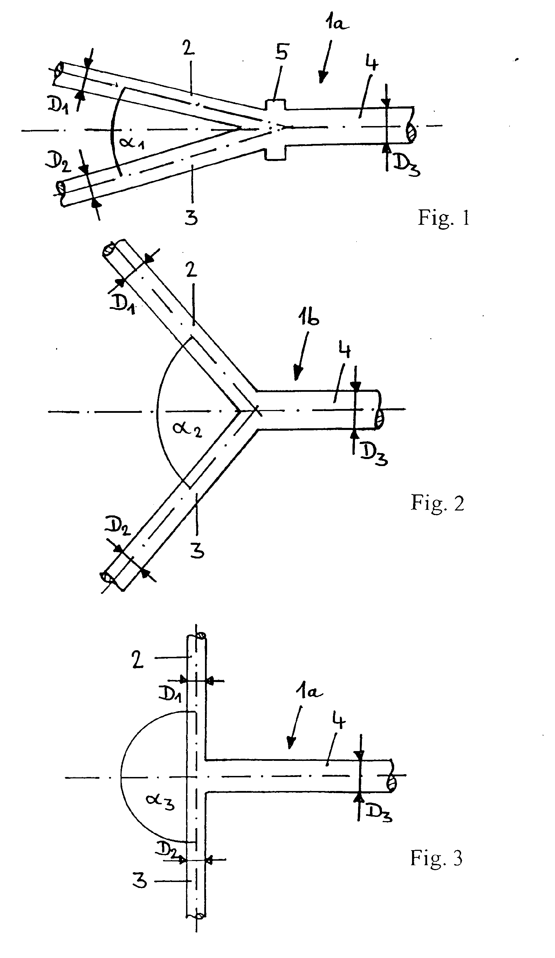

In Fig. 1 ist eine erste Ausführungsform einer zur Durchführung des erfindungsgemäßen Verfahrens einsetzbaren Mehr-' stoffdüse 1a dargestellt. Die Mehrstoffdüse 1a weist einen ersten Düsenkanal 2, z.B. zum Beaufschlagen mit einer Lösung des zu kristallisierenden Stoffes unter Druck, und einem zweiten Düsenkanal 3 auf, z.B. zum Beaufschlagen mit einem Antisolvens unter Druck. Die Düsenkanäle 2, 3 sind unter einem endlichen Winkel $\alpha_1$ von vorliegend etwa 30° angeordnet und erstrecken sich linear aufeinander zu. Im Bereich des Schnittpunktes des ersten 2 und des zweiten Düsenkanals 3 mündet ein dritter Düsenkanal 4, welcher zum Ausbringen des Kristallisates gemeinsam mit dem Lösungsmittel bzw. dem Antisolvens aus der Mehrstoffdüse 1a dient. Der dritte Düsenkanal 4 ist in Erstreckungsrichtung der Mittelsenkrechten zwischen dem ersten 2 und dem zweiten Düsenkanal 3 angeordnet, so daß jeder Düsenkanal 2, 3 unter einem Winkel $\alpha/2$ von im vorliegenden Fall etwa 15° in den dritten Düsenkanal 4 einmündet.

Während der Durchmesser $D_1$, $D_2$ des ersten 2 bzw. des zweiten Düsenkanal 3 z.B. etwa 0,5 mm beträgt, beträgt der Durchmesser $D_3$ des dritten Düsenkanals 4 z.B. etwa 1,0 mm, so daß der beispielsweise runde Querschnitt des dritten Düsenkanals 4 (etwa 0,8 mm$^2$) größer ist als die Summe der runden Querschnitte des ersten und des zweiten Düsenkanals 2, 3 (jeweils etwa 0,2 mm$^2$) und die Düsenströmung folglich eine Beschleunigung infolge Druckexpansion in der Düse 1a erfährt. Die Länge des dritten Düsenkanals 4 beträgt beispielsweise etwa 30 mm. Im Bereich des Schnittpunktes der Mittelsenkrechten des ersten 2 und des zweiten Düsenkanals 3 besitzt der dritte Düsenkanal 4 eine Querschnittserweiterung 5, um die Verweilzeit der Düsenströmung im Mischbereich zu erhöhen und für eine zusätzliche Verwirbelung derselben zu sorgen.

Die Mehrstoffdüse 1b gemäß Fig. 2 unterscheidet sich von der in Fig. 1 wiedergegebenen Mehrstoffdüse 1a einerseits dadurch, daß sämtliche Düsenkanäle 2, 3, 4 einen konstanten Querschnitt aufweisen (z.B. wiederum etwa 0,5 mm für den ersten 2 und den zweiten Düsenkanal 3 und etwa 1,0 mm für den dritten Düsenkanal 4) und folglich keine Querschnittserweiterung 5 des dritten Düsenkanals 4 (vgl. Fig. 1) vorgesehen ist. Andererseits beträgt der Winkel $\alpha_2$ zwischen dem ersten 2 und dem zweiten Düsenkanal 3 beim vorliegenden Ausführungsbeispiel etwa 100° und münden der erste 2 und der zweite Düsenkanal 3 folglich unter einem Winkel von jeweils etwa 50° in den dritten Düsenkanal 4 ein.

Fig. 3 zeigt eine der Düse gemäß Fig. 2 entsprechende Mehrstoffdüse 1b mit einem Winkel $\alpha_3$ zwischen dem ersten 2 und dem zweiten Düsenkanal 3 von etwa 180°. Letztere münden jeweils unter einem Winkel von etwa 90° in den dritten Düsenkanal 4 ein.

**Beispiel 1:**

In einem doppelwandigen, temperierbaren Rührkessel werden 15 g Cyclotetramethylentetranitramin (Oktogen, HMX) in 100 g γ-Butyrolacton (GBL) gelöst und wird die Lösung auf 30°C temperiert. In einem zweiten temperierbaren Gefäß wird Wasser als Antisolvens ebenfalls auf 30°C temperiert.

Zur Herstellung von feindispersen Kristallen wird die Lösung mit einem Druck von etwa 100 bar dem ersten Düsenkanal 2 der Mehrstoffdüse 1b gemäß Fig. 2 mit einem Winkel $\alpha_2$ zwischen dem ersten 2 und dem zweiten Düsenkanal 3 von 100° aufgegeben, während das Antisolvens (Wasser) mit einem Druck von ebenfalls etwa 100 bar dem zweiten Düsenkanal 3 der Mehrstoffdüse 1b aufgegeben wird. Das Experiment wird jeweils mit einer Mehrstoffdüse 1b mit einem Winkel $\alpha_2$ von 60° bzw. 30°, aber mit ansonsten identischer Geometrie und unter identischen Bedingungen, wiederholt.

Die auf einem Sintermetallfilter abgeschiedenen HMX-Partikel bestehen aus weitestgehend defektfreien Kristallen hoher Reinheit mit einer in der nachfolgenden Tabelle 1 wiedergegebenen mittleren Partikelgröße $X_{50,3}$. Bei dieser mittleren Partikelgröße X handelt es sich um einen Medianwert (Index "50"). Der Partikeldurchmesser wurde mittels Laserbeugungsspektrometrie ermittelt, welche ein volumenbezogenes Verfahren darstellt und folglich eine Volumenverteilung (Index "3") liefert.

Tabelle 1:

| Partikelgröße der HMX-Kristalle bei Verwendung einer Mehrstoffdüse 1b gemäß Fig. 2 mit unter verschiedenen Winkeln $\alpha_2$ angeordneten ersten 2 und zweiten Düsenkanälen 3. | |
|---|---|
| $\alpha_2$ | $X_{50,3}$ [nm] |
| 100° | 260 |
| 60° | 490 |
| 30° | 990 |

Die durchgeführten Experimente zeigen, daß die Partikelgröße der erhaltenen HMX-Kristalle ausschließlich durch Variation des Winkels $\alpha_2$ zwischen dem ersten 2 und dem zweiten Düsenkanal 3 der Mehrstoffdüse 1b exakt und reproduzierbar voreingestellt werden kann, wobei die erhaltene Partikelgröße um so größer ist, je kleiner der Winkel $\alpha_2$ zwischen dem ersten 2 und dem zweiten Düsenkanal 3 gewählt wird.

**Beispiel 2:**

In einem doppelwandigen, temperierbaren Rührkessel werden 100 g N-Methylpyrrolidon (NMP) vorgelegt und das Lösungsmittel auf 40°C temperiert. Es wird so lange 1-Diamino-2,2-dinitroethylen (DADE, FOX7) zugesetzt, bis eine bei 40°C gesättigte Lösung vorliegt. In einem zweiten temperierbaren Gefäß wird Wasser als Antisolvens auf 30°C temperiert.
Zur Herstellung von feindispersen Kristallen wird die Lösung jeweils mit etwa 100 bar dem ersten Düsenkanal 2 einer Mehrstoffdüse 1b gemäß Fig. 2 aufgegeben, während das Antisolvens (Wasser) mit ebenfalls 100 bar dem zweiten Düsenkanal 3 der Mehrstoffdüse 1b aufgegeben wird. Das Experiment wird zwei Mal durchgeführt, wobei der Winkel $\alpha_2$ zwischen dem ersten 2 und dem zweiten Düsenkanal 3 120° bzw. 70° Grad beträgt. Sämtliche weiteren Versuchsparameter werden konstant gehalten.
Die auf einem Sintermetallfilter abgeschiedenen FOX7-Partikel weisen im Falle der Mehrstoffdüse 1b mit einem Winkel von 120° zwischen dem ersten 2 und dem zweiten Düsenkanal 3 eine mittlere Partikelgröße $X_{50,3}$ von etwa 420 nm auf, während sie im Falle der Mehrstoffdüse 1b mit einem Winkel von 70° zwischen dem ersten 2 und dem zweiten Düsenkanal 3 eine mittlere Partikelgröße $X_{50,3}$ von etwa 870 nm aufweisen.

**Beispiel 3:**

Es wird eine gesättigte Lösung von Ammoniumdinitramid (ADN) in Acetonitril ($CH_3$-C≡N) bei Raumtemperatur hergestellt und n-Heptan ebenfalls bei Raumtemperatur als Antisolvens bereitgestellt.
Zur Herstellung von feinen Kristallen wird die Lösung jeweils mit etwa 100 bar dem ersten Düsenkanal 2 einer Mehrstoffdüse 1b gemäß Fig. 2 aufgegeben, während das Antisolvens (n-Heptan) mit ebenfalls etwa 100 bar den zweiten Düsenkanal 3 der Mehrstoffdüse 1b aufgegeben wird. Das Experiment wird jeweils mit einer Mehrstoffdüse 1b mit einem Winkel von 90° bzw. 120° zwischen dem ersten 2 und dem zweiten Düsenkanal 3 durchgeführt. Alle übrigen Parameter werden konstant gehalten.
Die auf einem Sintermetallfilter abgeschiedenen ADN-Partikel weisen eine mittlere Partikelgröße $X_{50,3}$ von etwa 1450 nm (bei einem Winkel $\alpha_2$ von 90°) bzw. 870 nm (bei einem Winkel $\alpha_2$ von 120°) auf.

**Beispiel 4:**

Das Beispiel 3 wird anstelle von n-Heptan mit Dichlormethan als Antisolvens durchgeführt. Als Mehrstoffdüse wird wiederum eine Düse 1b gemäß Fig. 2 mit einem Winkel $\alpha_2$ zwischen dem ersten 2 und dem zweiten Düsenkanal von 90° bzw. 60° eingesetzt.
Die auf einem Sintermetallfilter abgeschiedenen ADN-Partikel weisen eine mittlere Partikelgröße $X_{50,3}$ von 2,0 μm (bei einem Winkel $\alpha_2$ von 90°) bzw. 3,2 μm (bei einem Winkel $\alpha_2$ von 60°) auf.

**Patentansprüche**

1. Verfahren zur Herstellung feindisperser kristalliner Treib-, Explosivstoffe und/oder Oxidatoren, indem der zu kristallisierende Stoff in wenigstens einem Lösungsmittel gelöst, die Lösung in einer Düsenströmung mit wenigstens einem, mit dem Lösungsmittel der Lösung zumindest teilweise mischbaren Antisolvens, in welchem der zu kristallisierende Stoff nicht oder nur gering löslich ist, in Kontakt gebracht wird, die feinen Kristalle des Stoffes dabei ausgefällt und die Kristalle anschließend von dem Lösungsmittel und/oder dem Antisolvens abgetrennt werden, wobei die Lösung in wenigstens einen ersten Düsenkanal (2) einer Mehrstoffdüse (1a, 1b) und das Antisolvens in wenigstens einen zweiten, unter einem endlichen Winkel ($\alpha$) bezüglich des ersten Düsenkanals (2) angeordneten zweiten Düsenkanal (3) der Mehrstoffdüse (1a, 1b) eingebracht werden, die Lösung innerhalb der Düse (1a, 1b) mit dem Antisolvens vermischt wird und die ausgefällten Kristalle gemeinsam mit dem Lösungsmittel und dem Antisolvens über wenigstens einen im Bereich des Schnittpunktes des ersten (2) und des zweiten Düsenkanals (3) mündenden dritten Düsenkanal (4) der Mehrstoffdüse (1a, 1b) aus der Düse (1a, 1b) ausgebracht werden, wobei Mehrstoffdüsen (1a, 1b) eingesetzt werden, bei welchen zumindest der erste Düsenkanal (2) und der zweite Düsenkanal (3) im wesentlichen linear aufeinander zulaufen, **dadurch gekennzeichnet, daß** die Partikelgröße der erzeugten Kristalle durch Variation des Winkels ($\alpha$) zwischen wenigstens zwei Düsenkanälen (2, 3, 4) der Mehrstoffdüse (1a, 1b) eingestellt wird.

2. Verfahren nach Anspruch 1, **dadurch gekennzeichnet, daß** die Partikelgröße der erzeugten Kristalle durch Variation des Winkels ($\alpha$) zwischen dem ersten Düsenkanal (2), in welchen die Lösung eingebracht wird, und dem zweiten Düsenkanal (3) der Mehrstoffdüse (1a, 1b), durch welchen das Antisolvens eingebracht wird, eingestellt wird, wobei der dritte Düsenkanal (4) der Mehrstoffdüse (1a, 1b), aus welchem die erzeugten Kristalle mit dem Lösungsmittel und dem Antisolvens aus der Düse (1a, 1b) ausgebracht werden, konstant in Erstreckungsrichtung der Mittelsenkrechte zwischen dem ersten Düsenkanal (2) und dem zweiten Düsenkanal (3) der Mehrstoffdüse (1a, 1b) gehalten wird.

3. Verfahren nach Anspruch 1 oder 2, **dadurch gekennzeichnet, daß** Mehrstoffdüsen (1a, 1b) mit einem Durchmesser ($D_1$, $D_2$) des ersten Düsenkanals (2) und des zweiten Düsenkanals (3) von höchstens 5 mm, insbesondere von höchstens 1 mm, eingesetzt werden.

4. Verfahren nach einem der Ansprüche 1 bis 3, **dadurch gekennzeichnet, daß** Mehrstoffdüsen (1a, 1b) mit einem Durchmesser ($D_3$) des dritten Düsenkanals (4) von höchstens 10 mm, insbesondere von höchstens 2 mm, eingesetzt werden.

5. Verfahren nach einem der Ansprüche 1 bis 4, **dadurch gekennzeichnet, daß** Mehrstoffdüsen (la) mit Düsenkanälen (2, 3, 4) mit im wesentlichen konstantem Querschnitt eingesetzt werden.

6. Verfahren nach einem der Ansprüche 1 bis 4, **dadurch gekennzeichnet, daß** Mehrstoffdüsen (1b) mit zumindest einem Düsenkanal, insbesondere dem dritten Düsenkanal (4), mit einem sich über dessen Länge verändernden Querschnitt ($D_3$) eingesetzt werden.

7. Verfahren nach einem der Ansprüche 1 bis 6, **dadurch gekennzeichnet, daß** die Mehrstoffdüse (1a, 1b) kontrolliert in Schwingungen versetzt wird.

8. Verfahren nach Anspruch 7, **dadurch gekennzeichnet, daß** die Mehrstoffdüse (1a, 1b) mittels Ultraschall in Schwingungen versetzt wird.

9. Verfahren nach Anspruch 7, **dadurch gekennzeichnet, daß** die Mehrstoffdüse (1a, 1b) mittels wenigstens eines piezoelektrischen Elementes in Schwingungen versetzt wird.

10. Verfahren nach einem der Ansprüche 1 bis 9, **dadurch gekennzeichnet, daß** die Lösung vor Einbringen in den Düsenkanal (2) der Mehrstoffdüse (1a, 1b) im wesentlichen gesättigt oder übersättigt wird.

11. Verfahren nach einem der Ansprüche 1 bis 10, **dadurch gekennzeichnet, daß** als Lösungsmittel ein organisches Lösungsmittel eingesetzt wird.

12. Verfahren nach einem der Ansprüche 1 bis 11, **dadurch gekennzeichnet, daß** als Antisolvens ein organisches Lösungsmittel oder Wasser eingesetzt wird.

**13.** Verfahren nach einem der Ansprüche 1 bis 12, **dadurch gekennzeichnet, daß** als Antisolvens ein überkritisches Fluid eingesetzt wird.

**14.** Verfahren nach einem der Ansprüche 1 bis 13, **dadurch gekennzeichnet, daß** zur Herstellung von aus wenigstens zwei Stoffen bestehenden Komposit-Kristallen wenigstens zwei Explosiv-, Treibstoffen und/oder Oxidatoren in dem Lösungsmittel gelöst werden.

**15.** Verfahren nach einem der Ansprüche 1 bis 14 zur Herstellung von feindispersen kristallinen Amin-, Amid-, Nitro-, Nitrat- und/oder Nitramin-Verbindungen, insbesondere aus der Gruppe Ammoniumdinitramid (ADN), Ammoniumnitrat (AN), Kaliumnitrat, Natriumnitrat, 2,4,6-Trinitrotoluol (TNT), 1,3,5-Triamino-2,4,6-trinitrobenzol (TATBN), 3-Nitro-1,2,4-triazol-5-on (NTO), Hexanitrostilben (HNS), Cyclotrimethylentrinitramin (Hexogen, RDX), Cyclotetramethylentetranitramin (Oktogen, HMX), 2,4,6,8,10,12-Hexanitro-2,4,6,8,10,12-hexaazaisowurtzitan (HNIW, CL20), 1-Diamino-2,2-dinitroethylen (DADE, FOX7), FOX12, Pentaerythritoltetranitrat (Nitropenta, PETN), Hexanitrodiphenylamin (Hexyl), Tetranitromethylanilin (Tetryl), Nitroguanidin (NQ), Triaminoguanidinnitrat (TAGN).

Fig. 1

Fig. 2

Fig. 3